# EUROPEAN PATENT SPECIFICATION

(11) **EP 2 588 522 B1**
(45) Date of publication and mention of the grant of the patent: **30.07.2014**
(21) Application number: 11730154.9
(22) Date of filing: 24.06.2011
(51) Int. Cl.: C08L 23/08, C09J 123/08, C08F 10/00

(54) **POLYOLEFIN ADHESIVE COMPOSITION**
KLEBSTOFF AUF DER BASIS VON POLYOLEFIN
COMPOSITION ADHESIVE A BASE DE POLYOLEFINES

(30) Priority: 29.06.2010 US 803541
(43) Date of publication of application: 08.05.2013
(73) Proprietor: Equistar Chemicals, LP, Houston, Texas 77010 (US)
(72) Inventor: BOTROS, Maged G., Liberty Township Ohio 45044 (US); MAVRIDIS, Harilaos, Lebanon Ohio 45036 (US)
(74) Representative: Sacco, Marco
(86) International application number: PCT/US2011/041855
(87) International publication number: WO 2012/003144

(56) References cited:
- WO-A1-2010/080110
- US-A1- 2007 021 295
- US-A1- 2007 054 142
- US-A1- 2007 167 569
- US-A1- 2008 032 148

## Description

### FIELD OF THE INVENTION

The invention relates to an adhesive composition. More particularly, the invention relates to an adhesive composition having improved adhesion and clarity.

### BACKGROUND OF THE INVENTION

Multilayer films and sheets are widely used for food packaging applications. Depending on the intended application, the number and arrangement of resin layers and the type of resins employed will vary. Polyolefin is often included as one of the layers for food contact and sealing properties. Ethylene-vinyl alcohol copolymers (EVOH) and polyamides (nylons) are widely used as oxygen and moisture barrier layers. Polyolefin adhesives, commonly referred to as tie layer adhesives, are used to bond the polyolefin layer with a dissimilar layer such as polyamides or EVOH layers in the multilayer constructions.

Polyolefin adhesives typically comprise a base resin, which is the predominant component in the blend, and a functionalized polymer such as maleated polyolefin. Linear low density polyethylene (LLDPE) is commonly used as a base resin for polyolefin adhesives.

Good adhesion to both of the polyolefin layer and the dissimilar layer is essential for the polyolefin adhesives to be used in the multilayer constructions. Many other properties of the polyolefin adhesives are also required for certain applications. For instance, for multilayer films used in food packaging, a high clarity of the adhesives is also often required because it allows the food to be seen clearly.

Efforts on improving polyolefin adhesives have been focused on the functionalized polymers, but not on the base resins such as LLDPE. New polyolefin adhesives are needed. Particularly, new polyolefin adhesives having improved adhesion and clarity are needed for the food packaging applications. Ideally, the improvement is achieved by improving the base resin LLDPE.

### SUMMARY OF THE INVENTION

The invention relates to an adhesive composition. The adhesive composition comprises
i) from 0.5 to 25 wt% of a maleated HDPE comprising less than 5 wt% of C₃ to C₁₀ alpha-olefins and having a density ranging from 0.942 g/cm³ to 0.965 g/cm³ containing from 0.1 wt% to 10 wt%, of grafted maleic anhydride;
ii) from 30 to 65 wt% of a linear low density polyethylene (LLDPE) made by a Ziegler-Natta catalyst which is supported on MgCl and comprises a TiCl₄ complex and an electron donor; wherein the catalyst has an Mg/Ti molar ratio greater than or equal to 7; wherein said LLDPE is a copolymer of ethylene and 1-butene having 1-butene content within the range of 2 to 20 wt% a density from 0.912 to 0.925 g/cm³ and, more and an MI₂ within the range of 0.5 to 15 dg/min:
iii) from 15 to 65 wt% of an elastomer being ethylene-propylene rubber comprising from 35 wt% to 75 wt% of ethylene and from 25 wt% to 65 wt% of propylene;
Surprisingly, the LLDPE made according to the invention provides the adhesive composition with improved adhesion and clarity, in multilayer articles.

### DETAILED DESCRIPTION OF THE INVENTION

The adhesive composition of the invention comprises a maleated polyolefin and a linear low density polyethylene (LLDPE). The LLDPE is made by a Ziegler-Natta catalyst which comprises an MgCl₂ support, a Ti(IV) complex, and an electron donor. The Ziegler-Natta catalyst has an Mg/Ti molar ratio greater than or equal to 7.

Suitable maleated polyolefin for use in the invention include maleated high density polyethylene (HDPE), low density polyethylene (LDPE), LLDPE, propylene homopolymers, propylene random copolymers, propylene impact copolymers, and mixtures thereof. Methods for maleating polyolefin are known. For instance, U.S. Pat. No. 6,716,928. Preferably, the maleated polyolefin is a maleated HDPE. Suitable HDPE for making maleated HDPE includes ethylene homopolymers and copolymers of ethylene and one or more C₃ to C₁₀ α-olefins. Suitable α-olefins include 1-butene, 1-hexene, and 1-octene, the like, and mixtures thereof. Preferably, the HDPE comprises less than 5 wt% of the C₃ to C₁₀ α-olefins. The density of HDPE is preferably within the range of 0.942 g/cm³ to 0.965 g/cm³ and more preferably within the range 0.952 g/cm³ to 0.965 g/cm³. The maleated polyolefin preferably contains from 0.1 wt% to 10 wt%, more preferably 0.5 wt% to 5 wt%, and most preferably from 1 wt% to 2.5 wt%, of grafted maleic anhydride.

Suitable LLDPE for use in the adhesive composition of the invention is made by a Ziegler-Natta catalyst. The Ziegler-Natta catalyst comprises an MgCl₂ support, a Ti(IV) compound, and an electron donor. Suitable Ti(IV) compound is preferably selected from the group consisting of TiX₄ and TiXₙ(OR)₄₋ₙ, where X is halogen, n is less than or equal to 3, and R is a C₁-C₁₀ hydrocarbon group. Preferably, X is chlorine. More preferably, the Ti(IV) compound is TiCl₄.

Suitable electron donors are preferably selected from the group consisting of alcohols, glycols, esters, ketones, amines, amides, nitrites, alkoxysilanes, ethers, and mixtures thereof. More preferably, the electron donor is an ether. Most preferably, the electron donor is tetrahydrofuran.

The Ziegler-Natta catalyst for making the LLDPE used in the adhesive composition of the invention is characterized by a high molar ratio of Mg/Ti. Suitable catalysts have an Mg/Ti molar ratio greater than or equal to 7, preferably within the range of 10 to 100, and most preferably within the range of 10 to 50. The Mg/Ti molar ratio can be determined by the catalyst formulation or by metal analysis of the polymer made by the catalyst. Suitable catalysts have a molar ratio of the electron donor to the Ti(IV) compound preferably within the range of 0.5 to 20, more preferably within the range of 5 to 20, and most preferably within the range of 10 to 15.

The methods for making the Ziegler-Natta catalysts are, in general, known. Preferably, the catalyst is made by contacting an MgCl₂-alcohol Lewis adduct with the Ti(IV) compound to form a solid intermediate. The solid intermediate is isolated, and then contacted with the electron donor. More details of the catalyst preparation are found in U.S. Pat. No. 7,592,286.

Suitable LLDPE prepared with the above Ziegler-Natta catalyst include copolymers of ethylene and one or more C₃ to C₁₀ α-olefins. Suitable α-olefins include 1-butene, 1-hexene, and 1-octene, and mixtures thereof. The LLDPE resin is a copolymer of ethylene and 1-butene having 1-butene content within the range of 2 to 20 wt%. The ethylene-1-butene copolymer preferably has a density from 0.912 to 0.925 g/cm³ and, more preferably, from 0.915 to 0.920 g/cm³. The ethylene-1-butene copolymer preferably has an MI₂ within the range of 0.5 to 15 dg/min and, more preferably, from 1 to 10 dg/min. Densities and MI₂ are determined in accordance with ASTM 1505 and 1238 (condition 190/2.16), respectively.

Methods for preparing LLDPE with Ziegler-Natta catalysts are known. Preferably, the polymerization is carried out in one or more polymerization reactors, of which at least one reactor is operating in gas phase. The gas phase reactor can be agitated and/or fluidized, and contains a gas phase comprising one or more α-olefins, optionally a molecular weight regulating agent, optionally one or more hydrocarbons having a boiling temperature higher than the boiling temperature of the monomer, and optionally one or more inert reaction mediums.

In one embodiment, the process is performed in a single gas phase reactor. The catalyst is continuously fed to the reactor, either directly, or through one or more pre-activation devices. The gas phase preferably comprises ethylene, one or more α-olefin comonomers, hydrogen, and propane. Monomers and other components are continuously fed into the reactor to maintain the reactor pressure and gas phase composition essentially constant. A product stream is continuously withdrawn from the reactor. The LLDPE is isolated from the product stream and the unreacted monomers and other components are recycled. A fluidization compressor is often used to circulate the gas contained in the reactor, at such a recirculation velocity that the polymeric bed is maintained in the fluidized state.

In another embodiment, the process is performed in two gas phase reactors in series. The catalyst is continuously fed to the first reactor, either directly, or through one or more pre-activation devices. The gas phase of the first reactor preferably comprises ethylene, one or more α-olefin comonomers, hydrogen, and propane. Monomers and other components are continuously fed to the first reactor to maintain the reactors pressure and gas phase composition essentially constant. A product stream is withdrawn from the first gas phase reactor and fed to the second. The gas phase in the second reactor preferably differs from the first reactor so that the LLDPE made in the second reactor differs from the LLDPE made in the first reactor in either composition or molecular weight, or both. The end-product stream, which comprises the LLDPE made from the first and the second reactors, is withdrawn from the second reactor.

Surprisingly, the LLDPE made according to the invention provides the adhesive composition with improved adhesion and clarity compared with LLDPE resins made by a similar catalyst which has an Mg/Ti lower than 7.

Preferably the adhesive composition comprises an elastomer. Suitable elastomers include conjugated diene-based elastomers, olefin based elastomers, and mixtures thereof. By "conjugated diene-based elastomer," we mean any conjugated diene-containing polymers and copolymers which have a glass transition temperature (T_{g}) below room temperature (25°C). In other words, the conjugated diene-containing polymers and copolymers are in an elastomeric or rubber state at room temperature. Examples of conjugated diene-based elastomers include polybutadiene, polyisoprene, butadiene-vinyl aromatic random and block copolymers, isoprene-vinyl aromatic random and block copolymers, hydrogenated butadiene-vinyl aromatic block copolymers, hydrogenated isoprene-vinyl aromatic block copolymers, and mixtures thereof. Preferably, the conjugated diene-based elastomers are selected from the group consisting of butadiene-styrene block copolymers, isoprene-styrene block copolymers, hydrogenated butadiene-styrene block copolymers, hydrogenated isoprene-styrene block copolymers, and mixture thereof. More preferably, the conjugated diene-based elastomers are selected from the group consisting of styrene-butadiene-styrene triblock copolymers (SBS), styrene-isoprene-styrene triblock copolymers (SIS), and mixtures thereof. SBS is particularly preferred.

By "olefin elastomer," we mean any olefin polymers or copolymers which have elastomeric characteristics. Suitable polyolefin elastomers include ethylene-propylene rubber, ethylene-acrylate rubber, ethylene-1-butene rubber, ethylene-propylene-diene rubber (EPDM), polyethylene plastomers, elastoplastic polypropylene or impact polypropylene, and mixtures thereof. Preferably the polyolefin elastomers are selected from the group consisting of ethylene-propylene rubber, ethylene-1-butene rubber, EPDM, the like, and mixtures thereof. Ethylene-propylene rubber is particularly preferred. The ethylene-propylene rubber preferably comprises from 35 wt% to 75 wt% of ethylene and from 25 wt% to 65 wt% of propylene, and more preferably from 45 wt% to 75 wt% of ethylene and from 25 wt% to 55 wt% of propylene. The ethylene-propylene rubber can optionally comprise other comonomers. Other suitable comonomers include 1-butene, 1-pentene, 1-hexene, 4-methyl-1-pentene, 1-octene, butadiene, isoprene, and mixtures thereof. Suitable ethylene-1-butene based rubber preferably comprises from 35 wt% to 65 wt% of ethylene and from 35 wt% to 65 wt% of 1-butene, and more preferably from 45 wt% to 55 wt% of ethylene and from 45 wt% to 55 wt% of 1-butene. The ethylene-1-butene based rubber can optionally comprise other comonomers. Other suitable comonomers include propylene, 1-pentene, 1-hexene, 4-methyl-1-pentene, 1-octene, butadiene, isoprene, and mixtures thereof. Suitable EPDM preferably comprises from 35 wt% to 75 wt% of ethylene, 25 wt% to 55 wt% of propylene, and 2 wt% to 10 wt% of a diene monomer. Suitable diene monomers for making EPDM are preferably selected from dicyclopentadiene, ethylidene norbornene, and vinyl norbornene.

The elastomer is used in an amount preferably from 0.5 to 60 wt%, more preferably from 1 to 35 wt%, and most preferably from 5 to 20 wt%, of the adhesive composition. The adhesive composition of the invention optionally comprises other additives, fillers, and modifiers. Suitable additives include foaming agents, crosslinking agents, nucleation agents, flame retardants, processing aids, antistatic agents, lubricants, optical brighteners, pigments, dispersants, water-blocking agents, UV absorbents and light stabilizers, and mixtures thereof. Additives and fillers are used in an amount preferably within the range of 0.05 wt% to 35 wt%, more preferably within the range of 0.05 wt% to 15 wt%, of the adhesive composition.

The adhesive composition of the invention can be made by mixing the various components. Any suitable mixing methods known in the industry can be used. Melt blending is a preferred method. Melt mixing is preferably performed by extrusion. The invention includes an article comprising the adhesive composition, including multilayer films and sheets, pipes, geomembranes, containers, automotive parts, and wire and cable insulations and jackets in which the adhesive composition is used as an adhesive layer. By multilayer, we mean that the article has at least two more layers besides the adhesive layer. The adhesive layer bonds the other layers together. One example of multilayer film is a five-layer film which has the structure of polyethylene/adhesive layer/EVOH/adhesive layer/polyethylene. Ethylene-vinyl alcohol copolymer (EVOH) layer is employed as a barrier to oxygen. Suitable polyethylenes for use in the multilayer films and sheets are the same as discussed above. The articles of the invention can be made by many methods or processes. For instance, a multilayer film or sheet of the invention can be made by co-extrusion, coating, and other laminating processes.

The following examples merely illustrate the invention. Those skilled in the art will recognize many variations that are within the spirit of the invention and scope of the claims. None of the examples are according to the invention.

### EXAMPLE 1

A Ziegler-Natta catalyst is prepared by following Example 13 of U.S. patent 7,592,286, but using tetrahydrofuran (THF) rather than ethyl acetate as the electron donor. The catalyst has an Mg/Ti molar ratio of about 18. An LLDPE (ethylene-1-butene copolymer) is made in a gas phase polymerization process. The process uses a single fluidized bed reactor equipped with a gas recirculation compressor. The gas phase of the reactor is recycled with such a velocity that the polymeric bed in the reactor is kept in fluidized conditions. The gas phase comprises ethylene, 1-butene, hydrogen, and propane. The ethylene concentration is controlled to have a high polymerization rate while maintaining polymer morphology (fines formation, sheeting, chunks formation), and is kept at about 30 mol%. The 1-butene to ethylene ratio is controlled in such a way that the density of the formed polymer is on target. The hydrogen to ethylene ratio is controlled in such a way that the molecular weight or MI₂ of the formed polymer is on target.

The above-mentioned catalyst is fed continuously to a preactivation section, where the catalyst is contacted with trihexylaluminum and diethylaluminum chloride. From the preactivation section, the catalyst is continuously fed to said gas phase reactor. Apart from the preactivated catalyst, triethylaluminum is continuously fed to the polymerization reactor system. The pressure in the reactor is kept at about 21 barg, while the polymerization temperature in the reactor is controlled to be 86°C. The LLDPE polymer is withdrawn from the reactor bed and degassed.

The LLDPE has a melt index MI₂ of 2.0 g/10 min measured according to ASTM D1238 and a density of 0.918 g/cm³ measured according to ASTM D1505. An adhesive composition of the invention is prepared by melt-blending 91.3 parts by weight of the LLDPE, 8.5 parts by weight of a maleated high density polyethylene which contains 1.60 wt% of grafted maleic anhydride, and 0.1 parts by weight each of Irganox 1010 and Irgafos 168. A five-layer film is made by a coextrusion. The film has 3, 5 and 7 mils of total thickness and the following construction and weight percentage of each component:

| | | | | |
|---|---|---|---|---|
| 43% HDPE | 4% Adhesive layer | 6% EVOH | 4% Adhesive layer | 43% HDPE |

The adhesion strength at the EVOH/adhesive interface is 1.03, 1.55, and 2.19 pound per linear inch (P/LI) for the 3, 5 and 7 mil films, respectively, as determined in accordance with ASTM method D1876.

### COMPARATIVE EXAMPLE 2

An LLDPE is made by a Ziegler-Natta catalyst having an Mg/Ti molar ratio of about 5.8 measured according to ICP metal analysis of the polymer. The LLDPE has a melt index MI₂ of 2.0 g/10 min and a density of 0.918 g/cm³. An adhesive composition is formulated from the LLDPE and evaluated according to the general procedure of Example 1. The adhesion strength at the EVOH/adhesive interface is 0.95, 1.52, and 2.01 pound per linear inch (P/LI) for the 3, 5 and 7 mil films respectively.

### EXAMPLE 3

The general procedure of claim 1 is followed. An adhesive composition is prepared by melt-blending 67.8 parts by weight of the LLDPE from Example 1, 12 parts by weight of a maleated high density polyethylene which contains 1.60 wt% of grafted maleic anhydride, 20% ethylene-propylene rubber EPR (72% ethylene and 28% propylene and an MI of 1.0 dg/min) and 0.1 parts by weight each of Irganox 1010 and Irgafos 168. A five-layer film is made by a coextrusion. The film has 3, 5 and 7 mils of total thickness and the following construction and weight percentage of each component:

| | | | | |
|---|---|---|---|---|
| 43% HDPE | 4% Adhesive layer | 6% EVOH | 4% Adhesive layer | 43% HDPE |

The adhesion strength at the EVOH/adhesive interface is 1.85, 3.12, and 4.53 pound per linear inch (P/LI) for the 3, 5 and 7 mil films respectively.

### COMPARATIVE EXAMPLE 4

Example 3 is repeated but the LLDPE used is from Comparative Example 2. The adhesion strength at the EVOH/adhesive interface is 1.77, 2.98, and 4.44 pound per linear inch (P/LI) for the 3, 5 and 7 mil films respectively.

### EXAMPLE 5

See-through clarity is measured using the narrow angle scattering (NAS) technique according to ASTM D 1746. Clarity refers to the optical distinctness which an object can be seen when viewed through a film. Clarity depends upon the linearity of the passage of light rays through the material. Small deflections of the light, caused by scattering centers of the material, bring about a deterioration of the image. These deflections are much smaller than those registered in haze measurements. While haze measurements depend upon wide-angle scattering, clarity is determined by small-angle scattering.

The test unit used is the Zebedee CL-100 clarity meter. The film test specimens are cut into 4" x 4" squares and attached to the test unit in front of the light source by air suction. The film specimens are oriented in the same direction and tested in the same fashion to minimize testing variables. A minimum of 6 specimens are run for each sample. The higher the NAS value is, the higher the clarity of the multi-layer film. An adhesive composition of the invention is prepared as in Example 1. The film has 5 mil of total thickness and the following construction and weight percentage of each component. The measured NAS is 27.7.

| | | | | |
|---|---|---|---|---|
| 40% EVA | 5% Adhesive layer | 10% EVOH | 5% Adhesive layer | 40% EVA |

### COMPARATIVE EXAMPLE 6

Example 5 is repeated but the adhesive is made according to Comparative Example 2. The NAS value is 16.4

## Claims

1. An adhesive comprising:
i) from 0.5 to 25 wt% of a maleated HDPE comprising less than 5 wt% of C₃ to C₁₀ alpha-olefins and having a density ranging from 0.942 g/cm³ to 0.965 g/cm³ containing from 0.1 wt% to 10 wt%, of grafted maleic anhydride;
ii) from 30 to 65 wt% of a linear low density polyethylene (LLDPE) made by a Ziegler-Natta catalyst which is supported on MgCl₂ and comprises a TiCl₄ complex and an electron donor; wherein the catalyst has an Mg/Ti molar ratio greater than or equal to 7;
wherein said LLDPE is a copolymer of ethylene and 1-butene having 1-butene content within the range of 2 to 20 wt% a density from 0.912 to 0.925 g/cm³ and, more and an MI₂ within the range of 0.5 to 15 dg/min:
iii) from 15 to 65 wt% of an elastomer being ethylene-propylene rubber comprising from 35 wt% to 75 wt% of ethylene and from 25 wt% to 65 wt% of propylene;
Densities and MI₂ are determined in accordance with ASTM 1505 and 1238 (condition 190/2.16), respectively.

2. The adhesive of claim 1, wherein the electron donor is tetrahydrofuran.

3. The adhesive of claim 7, wherein the Mg/Ti molar ratio is within the range of 10 to 100.

4. The adhesive of claim 3, wherein the Mg/Ti molar ratio is within the range of 10 to 50.

5. A multilayer article comprising a layer of the adhesive of claim 1.

## Patentansprüche

1. Klebstoff, umfassend:
i) von 0,5 bis 25 Gew.-% eines maleierten HDPE, umfassend weniger als 5 Gew.-% C₃- bis C₁₀-α-Olefine und mit einer Dichte im Bereich von 0,942 g/cm³ bis 0,965 g/cm³ mit von 0,1 bis 10 Gew.-% gepfropftem Maleinsäureanhydrid;
ii) von 30 bis 65 Gew.-% eines linearen Polyethylens niederer Dichte (LLDPE), hergestellt mittels eines Ziegler-Natta-Katalysators, der auf MgCl₂ geträgert ist und einen TiCl₄-Komplex und einen Elektronendonator umfasst; wobei der Katalysator ein Molverhältnis von Mg/Ti größer als oder gleich 7 aufweist; wobei das LLDPE ein Copolymer von Ethylen und 1-Buten mit einem 1-Butengehalt im Bereich von 2 bis 20 Gew.-%, eine Dichte von 0,912 bis 0,925 g/cm³ und einen MI₂ im Bereich von 0,5 bis 15 dg/min aufweist; und
iii) von 15 bis 65 Gew.-% eines Elastomers, das Ethylen-Propylen-Kautschuk ist, umfassend von 35 bis 75 Gew.-% Ethylen und von 25 bis 65 Gew.-% Propylen.
Die Dichten und der MI₂ werden gemäß ASTM 1505 bzw. 1238 (Bedingung 190/2.16) bestimmt.

2. Klebstoff nach Anspruch 1, wobei der Elektronendonator Tetrahydrofuran ist.

3. Klebstoff nach Anspruch 1, wobei das Molverhältnis von Mg/Ti im Bereich von 10 bis 100 liegt.

4. Klebstoff nach Anspruch 3, wobei das Molverhältnis von Mg/Ti im Bereich von 10 bis 50 liegt.

5. Mehrschichtartikel, umfassend eine Schicht des Klebstoffs nach Anspruch 1.

## Revendications

1. Adhésif comprenant :
i) 0,5 à 25% en poids d'un HDPE portant des groupes maléate, comprenant moins de 5% en poids alpha-oléfines en C₃ à C₁₀ et présentant une densité dans la plage de 0,942 g/cm³ à 0,965 g/cm³, contenant 0,1% en poids à 10% en poids d'anhydride maléique greffé ;
ii) 30 à 65% en poids d'un polyéthylène linéaire basse densité (LLDPE) préparé par un catalyseur de Ziegler-Natta qui est supporté sur MgCl₂ et comprend un complexe TiCl₄ et un donneur d'électrons ; le catalyseur présentant un rapport molaire Mg/Ti supérieur ou égal à 7 ; ledit LLDPE étant un copolymère d'éthylène et de 1-butène présentant une teneur en 1-butène dans la plage de 2 à 20% en poids, une densité de 0,912 à 0,925 g/cm³ et un MI₂ dans la plage de 0,5 à 15 dg/min ;
iii) 15 à 65% en poids d'un élastomère consistant en un caoutchouc d'éthylène-propylène comprenant 35% en poids à 75% en poids d'éthylène et 25% en poids à 65% en poids de propylène ;
les densités et les MI₂ sont déterminés respectivement conformément aux normes ASTM 1505 et 1238 (condition 190/2,16).

2. Adhésif selon la revendication 1, dans lequel le donneur d'électrons est le tétrahydrofuranne.

3. Adhésif selon la revendication 1, dans lequel le rapport molaire Mg/Ti se situe dans la plage de 10 à 100.

4. Adhésif selon la revendication 3, dans lequel le rapport molaire Mg/Ti se situe dans la plage de 10 à 50.

5. Objet multicouche comprenant une couche de l'adhésif de la revendication 1.
